# EUROPEAN PATENT SPECIFICATION

(11) **EP 1 988 690 B1**
(45) Date of publication and mention of the grant of the patent: **08.04.2015**
(21) Application number: 07714134.9
(22) Date of filing: 14.02.2007
(51) Int. Cl.: H04M 1/02, H04M 1/21, H04R 3/00, H04M 1/03, H04M 1/04

(54) **ACOUSTIC DEVICE**
AKUSTISCHE EINRICHTUNG
DISPOSITIF ACOUSTIQUE

(30) Priority: 16.02.2006 JP 2006040046
(43) Date of publication of application: 05.11.2008
(73) Proprietor: KYOCERA CORPORATION, Kyoto-shi, Kyoto 612-8501 (JP)
(72) Inventor: TANAKA, Kenjic/o KYOCERA CORPORATION,, Kanagawa;2248502 (JP); HIWATASHI, Koujic/o KYOCERA CORPORATION,, Kanagawa;2248502 (JP)
(74) Representative: Thun, Clemens
(86) International application number: PCT/JP2007/052556
(87) International publication number: WO 2007/094333

(56) References cited:
- JP-A- 2002 237 874
- JP-A- 2003 032 351
- JP-A- 2003 032 351
- JP-A- 2004 064 302
- JP-A- 2006 054 726
- JP-A- 2006 211 238
- JP-A- 2006 217 142

## Description

### TECHNICAL FIELD

The present invention relates to an audio device including a magnetic sensor and a speaker.

### BACKGROUND ART

A mobile phone provided with a magnetic sensor is known. For example, a mobile phone provided with a geomagnetic sensor as the magnetic sensor is disclosed (for example, Patent Document 1). In the mobile phone of Patent Document 1, a bearing specified based on a result of detection of the geomagnetic sensor is displayed on a display. Patent Document 1 also discloses that calibration of the geomagnetic sensor for eliminating the influence of a magnetic field formed by magnetized electronic parts on the geomagnetic sensor.

Other than this, a mobile phone provided with an opened and closed detecting sensor detecting an opened and closed state of an openable and closable mobile phone as the magnetic sensor is known. For example, a magnet is provided in one housing of the mobile phone, and an opened and closed detecting sensor is provided in the other housing. The magnet approaches or moves away from the opened and closed detecting sensor along with opening and closing of the mobile phone. The opened and closed detecting sensor detects a closed state when an intensity of the magnetic field becomes a predetermined value or more due to the approach of the magnet, while detects an opened state when the intensity of the magnetic field becomes less than the predetermined value due to the magnet moving.

Further, a technique of providing a speaker in a cradle for charging the mobile phone (charging stand, external speaker device) and converting an audio signal generated at the mobile phone to sound by the speaker of the cradle is known (Patent Document 2). Specifically, when the mobile phone is placed on the cradle to enable charging, audio signal terminals provided in the mobile phone and the cradle are connected to each other. Further, speech or music or another audio signal generated at the mobile phone is output via the terminals to the cradle, whereby the speech and music are emitted from the speaker of the cradle.

Further, Patent Document 3 discloses a mobile terminal with a magnetic sensor in the portable housing, wherein the sensor and the speaker are arranged at positions not superposed on each other in a direction perpendicular to a predetermined surface of the housing.
Patent Document 1: Japanese Patent Publication (A) No. 2005-291936
Patent Document 2: Japanese Patent Publication (A) No. 2003-32351
Patent Document 3: Japanese Patent Publication (A) No. 2004-064302

### DISCLOSURE OF THE INVENTION

### PROBLEM TO BE SOLVED BY THE INVENTION

When a portable electronic device is placed on a cradle, the electronic parts of the portable electronic device are magnetized by a magnetic field formed by a speaker of the cradle. If the influence of the magnetization exerted upon the magnetic field at the position of arrangement of the geomagnetic sensor is large, the geomagnetic sensor must be calibrated. Further, there also exists the possibility that the opened and closed state will not be normally detected due to the detection by the opened and closed detecting sensor of the magnetic field formed by the speaker of the cradle.

However, the patent documents explained above do not disclose a combination of a portable electronic device provided with a geomagnetic sensor and a cradle provided with a speaker and do not suggest the influence of the magnetic field formed by the speaker of the cradle exerted upon the geomagnetic sensor of the portable electronic device when the portable electronic device is placed on a cradle.

It is desirable that an audio device able to reduce the influence of a magnetic field formed by an external speaker upon a geomagnetic sensor be provided.

### MEANS FOR SOLVING THE PROBLEM

An audio device of the present invention has an external speaker converting an audio signal and outputting the result; a portable housing which can be arranged in a predetermined positional relationship with respect to the external speaker; an audio output unit arranged in the portable housing and configured to be outputable the audio signal to the external speaker when the portable housing is arranged in the predetermined positional relationship with respect to the external speaker; and a magnetic sensor arranged in the portable housing, wherein the magnetic sensor and the external speaker are arranged at positions not superposed (overlapped) on each other in a direction perpendicular to a predetermined surface of the portable housing facing the external speaker when the portable housing is arranged in the predetermined positional relationship with respect to the external speaker. In accordance with the present invention, the magnetic sensor is a geomagnetic sensor detecting geomagnetism, and the audio device has a report unit configured to report a bearing specified based on the geomagnetism detected by the geomagnetic sensor.

Preferably, the portable housing has a first housing and a second housing which are connected to be openable and closable, the predetermined positional relationship is a positional relationship where the first housing is arranged at a certain position with respect to the external speaker, and the magnetic sensor is arranged in the first housing.

Preferably, the portable housing has a first housing and a second housing which are connected to be openable and closable, the predetermined positional relationship is a positional relationship where the first housing is arranged at a certain position with respect to the external speaker, the second housing can move in an opening and closing direction with respect to the first housing in a state where the first housing is arranged at the certain position, the report unit is a display unit provided in the second housing, and the magnetic sensor is provided in the first housing.

### EFFECTS OF THE INVENTION

According to the present invention, the influence of a magnetic field formed by an external speaker on a geomagnetic sensor can be reduced.

### BRIEF DESCRIPTION OF THE DRAWINGS

[FIGS. 1] Front views partially including perspective views showing a mobile phone and a cradle of a portable electronic unit according to an embodiment of the present invention.
[FIGS. 2] Front views partially including perspective views showing the portable electronic unit of FIG. 1A to FIG. 1C in a state where the mobile phone is placed on the cradle.
[FIGS. 3] Side views partially including perspective views showing the portable electronic unit of FIG. 1A to FIG. 1C in a state where the mobile phone is placed on the cradle.
[FIG. 4] A block diagram showing the configuration of a signal processing system of the portable electronic unit of FIG. 1A to FIG. 1C.
[FIGS. 5] Diagrams showing measurement results of magnetic fields formed by a speaker of the cradle in the embodiment of the portable electronic unit of FIG. 1A to FIG. 1C.

### DESCRIPTION OF NOTATIONS

1... mobile phone unit (portable electronic unit), 2... mobile phone (portable electronic device), 3... cradle (external speaker device), 5... receiver housing (portable housing), 6... transmitter housing (portable housing), 6a... back surface (predetermined surface), 18... housing, 23... speaker, 33... audio processing unit (audio output unit), 42... opened and closed detecting sensor (magnetic sensor), and 43... geomagnetic sensor (magnetic sensor).

### BEST MODE FOR CARRYING OUT THE INVENTION

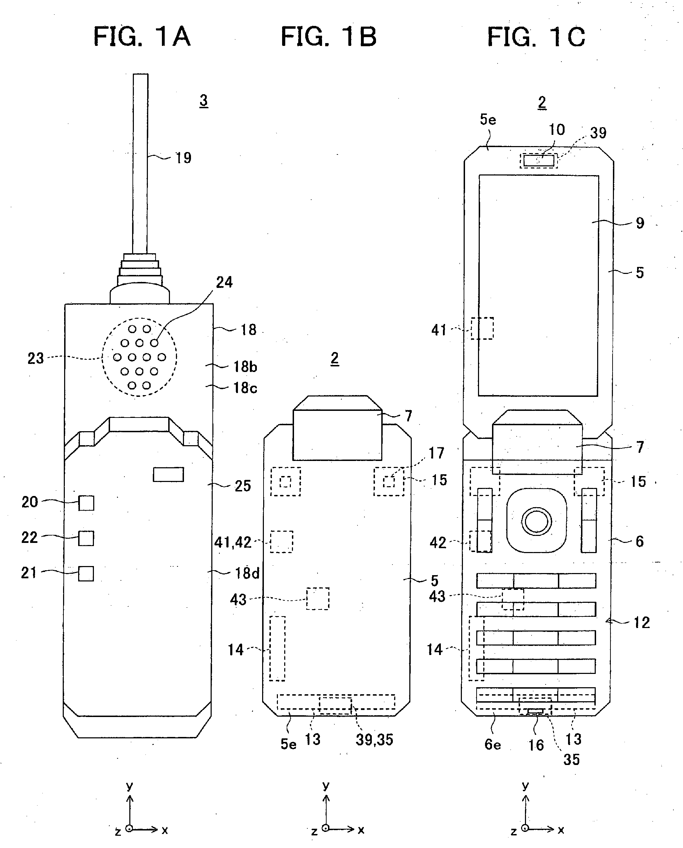

FIG. 1A to FIG. 1C are plan views partially including perspective views showing a mobile phone unit 1 configured by a mobile phone (portable electronic device) 2 and a cradle (external speaker device) 3 according to an embodiment of the present invention, in which FIG. 1A shows the cradle 3, FIG. 1B shows the mobile phone 2 in a closed state, and FIG. 1C shows the mobile phone 2 in an opened state.

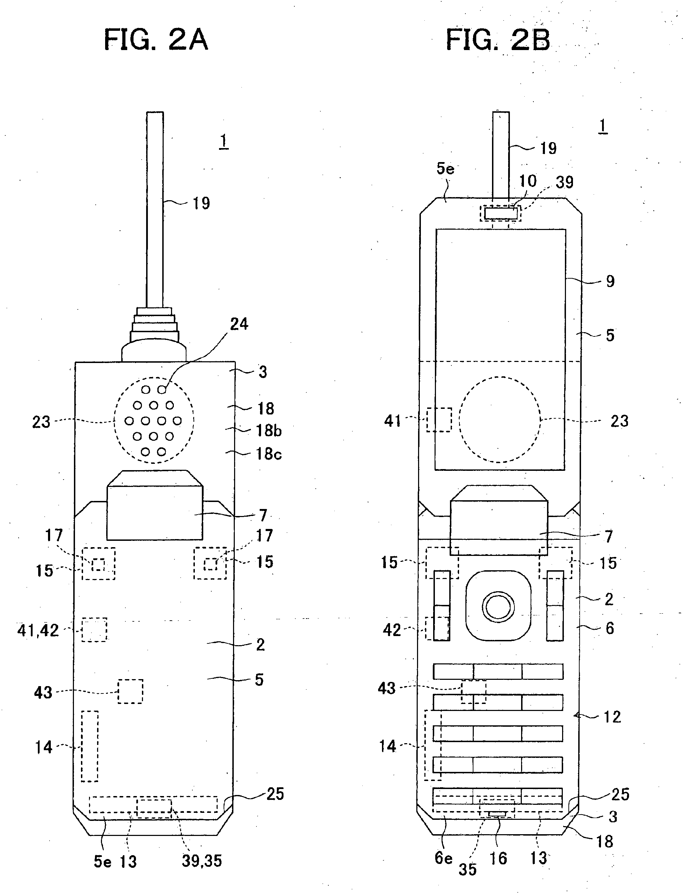

FIG. 2A and FIG. 2B are plan views partially including perspective views showing a state where the mobile phone 2 is placed on the cradle 3, in which FIG. 2A shows a case where the mobile phone 2 is closed, and FIG. 2B shows a case where the mobile phone 2 is opened.

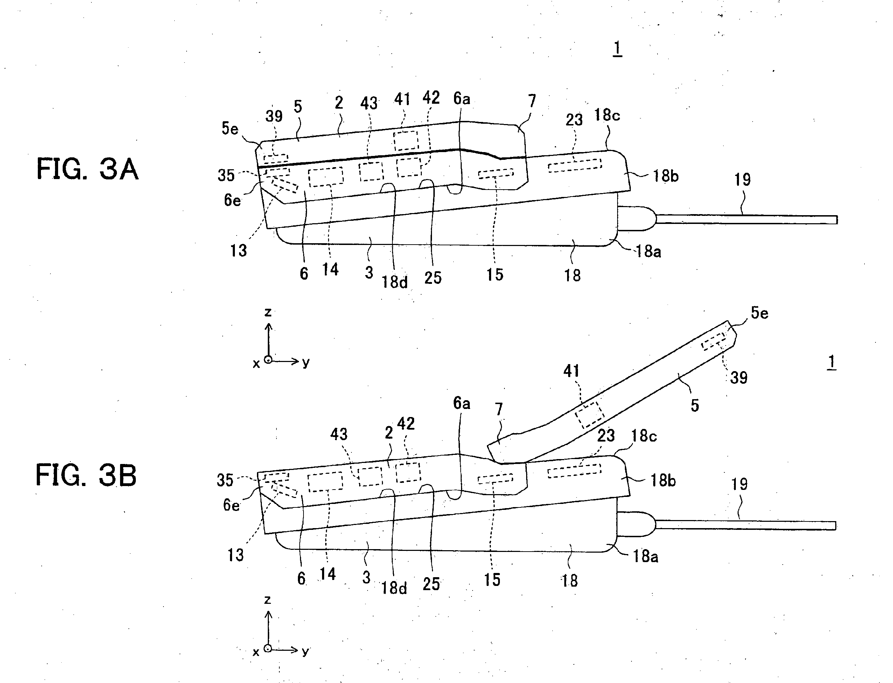

FIG. 3A and FIG. 3B are side views partially including perspective views showing a state where the mobile phone 2 is placed on the cradle 3, in which FIG. 3A shows the case where the mobile phone 2 is closed, and FIG. 3B shows the case where the mobile phone 2 is opened.

The mobile phone 2 is configured as a so-called flip-open type mobile phone and is provided with a receiver housing 5 and a transmitter housing 6. Note that the combination of the receiver housing 5 and the transmitter housing 6 is an example of the portable housing, the receiver housing 5 is an example of the second housing, and the transmitter housing 6 is an example of the first housing.

The receiver housing 5 and the transmitter housing 6 are connected in their end portions by a connecting portion 7, and the mobile phone 2 can be opened and closed with the connecting unit 7 as the center of pivot. The receiver housing 5 and the transmitter housing 6 are formed to schematically thin type parallelepiped bodies, and superposed on each other in the closed state so that their contours schematically coincide with each other when viewing the other housing side from one housing side.

The receiver housing 5 is formed to for example an approximately thin parallelepiped body by a plastic. The receiver housing 5 is provided with a display unit 9 displaying various information as images, a speech use speaker 39, and a magnet 41 to be detected for an opened and closed detecting sensor 42 explained later.

The display unit 9 is configured by for example a liquid crystal display and can display an image on a counter surface facing the transmitter housing 6 in the closed state in the receiver housing 5. Note that, a sub display unit displaying an image may be provided on a back surface side of the receiver housing 5 as well.

The speech use speaker 39 is provided at the center of an end portion 5e on the opposite side to the connecting portion 7 in the receiver housing 5. The speaker 39 is configured by for example a dynamic speaker. Namely, it has a coil receiving as input an audio signal (electric signal), a magnet inserted through the coil, and a vibration plate fixed to the coil or magnet.

Note that the speaker 39 may be one converting an audio signal to sound by utilizing magnetism or one not utilizing magnetism such as a condenser speaker. Further, when the speaker is one converting an audio signal to sound by utilizing magnetism, it may be one other than a dynamic speaker for example a ribbon speaker as well.

The sound output by the speaker 39 is output from an emission hole 10. The emission hole 10 is provided at the center of the end portion 5e on the opposite side to the connecting portion 7 in the receiver housing 5 corresponding to the position of the speaker 39 and is opened in the counter surface of the receiver housing 5.

The transmitter housing 6 is formed to for example an approximately thin parallelepiped body by a plastic. The transmitter housing 6 is provided with an operation unit 12 accepting the operation of a user, a main antenna 13 and a sub antenna 14 performing transmission and reception of electric waves, a speaker 15 outputting report sounds etc., a speech use microphone 35, an opened and closed detecting sensor 42, and a geomagnetic sensor 43.

The main antenna 13 is built in an end portion 6e on the opposite side to the connecting portion 7 in the transmitter housing 6. The sub antenna 14 is built in the transmitter housing 6 on the side surface side of the transmitter housing 6 at a position between the center of the transmitter housing 6 and the main antenna 13. The main antenna 13 and the sub antenna 14 are configured as diversity antennas. For example, the main antenna 13 is used for transmission and reception of speech, transmission and reception of e-mail, and so on and always utilized. The sub antenna 14 is utilized together with the main antenna 13 when data communication other than speech is carried out for example when music is downloaded.

Report use speakers 15 are provided in the end portion on the connecting portion 7 side of the transmitter housing 6. Two speakers 15 are provided on sides of the transmitter housing 6. The speaker 15 is configured by for example a dynamic speaker. Namely, it has a coil receiving as input an audio signal (electric signal), a magnet inserted through the coil, and a vibration plate fixed to the coil or magnet.

Note that the speaker 15 may be one converting an audio signal to sound by utilizing magnetism or one not utilizing magnetism such as a condenser speaker. Further, when the speaker is one converting an audio signal to sound by utilizing magnetism, it may be one other than a dynamic speaker, for example, a ribbon speaker as well.

The sound output from the speaker 15 is output from emission holes 17. Two emission holes 17 are provided on sides of the end portion on the connecting portion 7 side of the transmitter housing 6 corresponding to the position of the speaker 15 and opened in the surface opposite to the surface facing the receiver housing 5 (surface facing the cradle). Note that, the sound emission holes 17 may be opened in side surfaces of the transmitter housing 6 as well.

The speech use microphone 35 is provided at the center of the end portion 6e on the opposite side to the connecting portion 7 in the transmitter housing 6. The microphone 35 is configured by for example a dynamic microphone. Namely, it has a coil outputting an audio signal, a magnet inserted through the coil, and a vibration plate fixed to the coil or magnet.

Note that the microphone 35 may be one converting sound to an audio signal by utilizing magnetism or one not utilizing magnetism such as a condenser microphone. Further, only when the microphone is one converting sound to an audio signal by utilizing magnetism, it may be one other than a dynamic microphone, for example, a ribbon microphone as well.

To the microphone 35, sound is input via a sound collecting hole 16. The sound collecting hole 16 is provided at the center of the end portion 6e on the opposite side to the connecting portion 7 in the transmitter housing 6 corresponding to the position of the microphone 35 and opened in the counter surface facing the receiver housing 5.

The opened and closed detecting sensor 42 is configured by a magnetic sensor. For example, the opened and closed detecting sensor 42 includes a Hall IC or magnetoresistance element and outputs a signal having a potential in accordance with the detected intensity of the magnetic field in the predetermined direction. The opened and closed detecting sensor 42 is provided near the center in a longitudinal direction (near the center between the connecting portion 7 and the end portion 6e on the opposite side to the connecting portion 7) and sideward in the transmitter housing 6.

In the receiver housing 5, the magnet 41 explained before is provided at a position facing the opened and closed detecting sensor 42 in the closed state. Accordingly, when the mobile phone 2 is closed, the magnet 41 and the opened and closed detecting sensor 42 become close, and the magnetic field at the position of arrangement of the opened and closed detecting sensor 42 becomes strong. When the mobile phone 2 is opened, the magnet 41 and the opened and closed detecting sensor 42 are spaced apart, and the magnetic field at the position of arrangement of the opened and closed detecting sensor 42 becomes weak. Accordingly, the detection of the opened and closed state (the detection of the closed state) can be performed according to whether or not the intensity of the magnetic field detected by the opened and closed detecting sensor 42 is larger than the predetermined threshold value. Note that, the opened and closed detecting sensor 42 may be configured to output an ON signal or OFF signal in accordance with whether or not the detected intensity of the magnetic field is larger than the predetermined threshold value as well.

The geomagnetic sensor 43 includes a Hall IC or a magnetoresistance element, detects the intensity of the magnetic field for each 2 axes or 3 axes, and outputs a signal in accordance with the detected intensity of the magnetic field. Then, the bearing is specified from a ratio of the intensity of the magnetic field for each axis output from the geomagnetic sensor 43. Note that, the geomagnetic sensor 43 may be configured to perform computation for specifying the bearing and output a signal in accordance with the specified bearing. The geomagnetic sensor 43 is arranged in the transmitter housing 6 near the center in the longitudinal direction (near the center between the connecting portion 7 and the end portion 6e on the opposite side to the connecting portion 7) and sideward. In more detail, the geomagnetic sensor 43 is arranged closer to the end portion 6e side than the opened and closed detecting sensor 42.

The cradle 3 is provided with a housing 18, a cord 19 for supplying electric power to the cradle 3, charge terminals 20 and 21 and an audio signal terminal 22 for electrically connecting the cradle 3 and the mobile phone 2, and a speaker 23 outputting sound based on the audio signal input from the mobile phone 2. Note that, the speaker 23 is an example of the external speaker.

The housing 18 has for example a lower cover 18a placed on a desk or the like and an upper cover 18b covered on the lower cover 18a. The lower cover 18a and upper cover 18b are formed by for example plastic. The upper cover 18b is covered on the lower cover 18a to be inclined with respect to the surface on which the housing 18 is placed, and the housing 18 is formed as a whole to a trapezoidal shape having an inclined surface 18c inclined with respect to the placed surface (desk surface etc.).

In the top surface of the housing 18, a recess (placing portion) 25 for placing the mobile phone 2 is formed. The recess 25 is provided on the lower side of the inclined surface 18c. The recess 25 is formed to a shape so that the transmitter housing 6 of the mobile phone 2 is fit (although the illustration is omitted, formed to a shape with tabs formed at both ends of the recess 25 and engaged with recesses formed on the connecting portion 7 side and microphone 35 side of the transmitter housing 6) and formed so that a placing surface (bottom portion of the recess 25) 18d against which the back surface 6a of the transmitter housing 6 abut is inclined with respect to on the surface (desk surface etc.) on which the cradle 3 is placed. The mobile phone 2 is placed on the cradle 3 by fitting and insertion of the transmitter housing 6 in the recess 25 while making the connecting portion 7 side face upward of the inclined surface 18c.

Note that, the back surface 6a of the transmitter housing 6 is an example of the predetermined surface of the portable housing. The positional relationship of the transmitter housing 6 and the housing 18 of the cradle 3 when the transmitter housing 6 is fitted and inserted in the recess 25 of the cradle 3 is an example of the predetermined positional relationship.

As shown in FIG. 3A and FIG. 3B, a depth of the recess 25 is approximately equal to or lower than the thickness of the transmitter housing 6. Accordingly, even if the receiver housing 5 is moved in the opening and closing direction in the state where the transmitter housing 6 is fit in the recess 25, a circumferential edge of the recess 25 of the inclined surface 18c does not abut against the receiver housing 5. Namely, the mobile phone 2 can be opened and closed in the state where it is placed on the cradle 3.

Accordingly, the mobile phone 2 can be brought to the open state or closed state in accordance with the state of use while it is placed on the cradle 3 as it is. For example, it can be opened in a case where an image is displayed in the display unit 9 such as movie playback and can be closed in a case where only charging is carried out or a case where music is played back.

The cord 19 is extended from the housing 18. A not shown power plug is provided on its tip end. By insertion of the power plug into a power outlet for supplying electric power of commercial frequency, electric power is supplied to the cradle 3 via the cord 19.

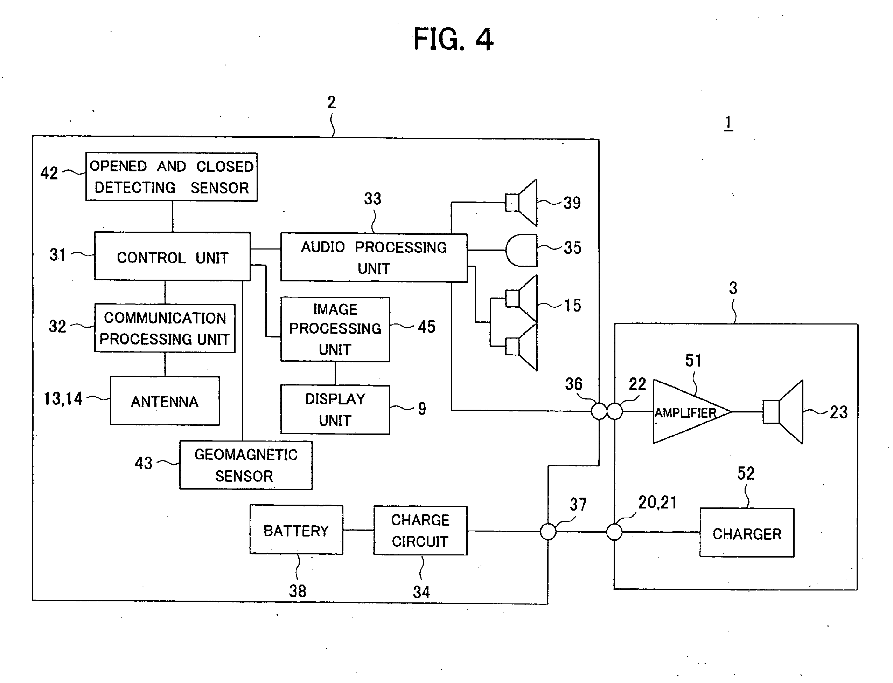

The charge terminals 20 and 21 are provided so as to protrude from the bottom portion of the recess 25. When the mobile phone 2 is fit and inserted in the recess 25, these terminals abut against the charge terminal 37 (see FIG. 4) provided on the surface facing the recess 25 of the transmitter housing 6 of the mobile phone 2 and are connected.

The audio signal terminal 22 is provided so as to protrude from the bottom portion of the recess 25. Further, this is provided adjacent to the charge terminals 20 and 21. The audio signal terminal 22 is provided on the surface facing the recess 25 of the transmitter housing 6 of the mobile phone 2 when the mobile phone 2 is fit and inserted in the recess 25, abutting against the audio signal terminal 36 (see FIG. 4) exposed from the back surface 6a and connected.

The speaker 23 is provided on the upper side of the inclined surface 18c than the recess 25. Accordingly, when the transmitter housing 6 of the mobile phone 2 fits in the recess 25, the speaker 23 is located on the outer side than one end in the longitudinal direction of the transmitter housing 6. Further, when the transmitter housing 6 is fit in the recess 25, the speaker 23 is superposed on the receiver housing 5 when the mobile phone 2 is in the open state, but not superposed on the receiver housing 5 when the mobile phone 2 is in the closed state when seen in the direction perpendicular to the back surface 6a of the transmitter housing 6.

The speaker 23 is configured by for example a dynamic speaker. Namely, it has a coil receiving as input an audio signal (electric signal), a magnet inserted through the coil, and a vibration plate fixed to the coil or magnet.

The speaker 23 is arranged so that the sound emission surface faces the inside surface of the inclined surface 18c (so that it faces upward). The sound output by the speaker 23 is emitted from sound emission holes 24. The sound emission holes 24 are provided on the upper side of the housing 18 of the cradle 3 corresponding to the position of arrangement of the speaker 23 and opened in the inclined surface 18c.

In the mobile phone unit 1, the speaker 23, the opened and closed detecting sensor 42, and the geomagnetic sensor 43 are arranged at positions not superposed on each other when seen in the direction perpendicular to the back surface 6a of the transmitter housing 6 when the transmitter housing 6 of the mobile phone 2 fits in the recess 25 of the housing 18 of the cradle 3. Namely, it can be said as well that the transmitter housing 6 and the speaker 23 are not superposed in an axial direction of the coil.

Specifically, the opened and closed detecting sensor 42 and the speaker 23 are arranged while being spaced apart from each other so that the intensity of the magnetic field in the predetermined direction at the position of arrangement of the opened and closed detecting sensor 42 formed by the speaker 23 becomes smaller than the threshold value for judging the opened and closed state based on the detection result of the magnetic field in the predetermined direction of the opened and closed detecting sensor 42 when the transmitter housing 6 of the mobile phone 2 fits in the recess 25 of the housing 18 of the cradle 3.

The opened and closed detecting sensor 42 and magnet 41 and the geomagnetic sensor 43 are arranged at positions not superposed on each other when seen in the direction perpendicular to the back surface 6a of the transmitter housing 6 when the transmitter housing 6 of the mobile phone 2 fits in the recess 25 of the housing 18 of the cradle 3.

The speaker 23, the opened and closed detecting sensor 42 and magnet 41, and the geomagnetic sensor 43 are arranged in the order of the speaker 23, the opened and closed detecting sensor 42 and magnet 41, and the geomagnetic sensor 43 in the longitudinal direction of the transmitter housing 6 when seen in the direction perpendicular to the back surface 6a of the transmitter housing 6 in the closed state when the transmitter housing 6 of the mobile phone 2 fits in the recess 25 of the housing 18 of the cradle 3.

FIG. 4 is a block diagram showing the configuration of a signal processing system of the mobile phone unit 1.

The mobile phone 2 has a control unit 31, a communication processing unit 32, an audio processing unit 33, an image processing unit 45, and a charge circuit 34. Note that the audio processing unit 33 is an example of the audio output unit. The mobile phone 2 has, other than these, a GPS processing unit receiving and processing GPS signals transmitted from a plurality of GPS satellites, calculating the geographical position of the present spot, and making the display unit display map data around the present spot, and so on, but the illustration is omitted.

The control unit 31 is configured by an IC including for example a CPU, ROM, and RAM. The CPU runs a program stored in the ROM to control the operations of the communication processing unit 32, audio processing unit 33, image processing unit 45, etc. based on signals etc. from the operation unit 12, opened and closed detecting sensor 42, geomagnetic sensor 43, etc.

For example, when receiving as input a signal having a potential in accordance with the detected intensity of the magnetic field from the opened and closed detecting sensor 42, based on this signal, the control unit 31 judges whether or not the detected intensity of the magnetic field is larger than the predetermined threshold value. It judges the closed state when the intensity is larger, while judges the opened state when the intensity is not larger. Then, the control unit 31 performs processing in accordance with the opened or closed state, for example, controls the operation of the image control unit 45 so that the display of the information by the display unit 9 is stopped when judging the closed state, while the display of the information is executed by the display unit 9 when judging the opened state.

Further, for example, the control unit 31 executes processing for reporting the bearing specified based on the detection result of the geomagnetic sensor 43, for example, when receiving as input the detected value of the intensity of the magnetic field for each of a plurality of axes from the geomagnetic sensor 43, the control unit 31 specifies the bearing based on the ratio of intensity of the magnetic field for each axis and controls the operation of the image processing unit 45 so as to make the display unit 9 display the specified bearing. The bearing is displayed by for example displaying a bearing symbol matched in orientation with the specified bearing or by matching the orientation of the map displayed by the GPS function with the specified bearing (heading up display).

The communication processing unit 32 includes a high frequency circuit and performs wireless communication utilizing radio waves. Specifically, the communication processing unit 32 modulates audio data, image data, and other various types of data processed at the control unit 31 etc. and transmits the same via the main antenna 13. Further, the communication processing unit 32 demodulates signals received via the main antenna 13 and sub antenna 14 and outputs the same to the control unit 31 etc.

The audio processing unit 33 outputs an audio signal from the microphone 35 to the control unit 31. The audio signal output to the control unit 31 is transmitted via the communication processing unit 32. Further, the audio processing unit 33 mixes, amplifies, etc. an audio signal of speech received by the communication processing unit 32 and output from the control unit 31, an audio signal based on music data stored in the external storage device, etc. and outputs the same to the speech use speaker 39, the speaker 15 utilized for reports etc., and the audio terminal 36.

The image processing unit 45 converts video data from the control unit 31 to a video signal and outputs the same to the display unit 9. For example, the control unit 31 downloads the map data of the present spot specified based on the GPS signal from the server, performs coordinate conversion of map data in accordance with the orientation (bearing) of the mobile phone 2 at present specified based on the detection result of the geomagnetic sensor 43, and outputs the map data after the coordinate conversion to the image processing unit 45 for display. Note that the coordinate conversion or other work may be shared by the image processing unit 45 as well.

The charge circuit 34 converts the electric power supplied to the charge terminal 37 to an electric power having an appropriate voltage and supplies this to the battery 38 serving as the power source of the mobile phone 2. Further, it starts charging (supplies electric power) to the battery 38 or interrupts the charging in accordance with the charge state etc. of the battery 38.

The cradle 3 has an amplifier 51 and a charger (AC converter) 52. The amplifier 51 amplifies an audio signal input from the mobile phone 2 via the audio signal terminal 22 and outputs the result to the speaker 23. The charger 52 converts an AC current having a commercial frequency supplied via the cord 19 to a DC current having an appropriate voltage and outputs the same to the charge terminals 20 and 21.

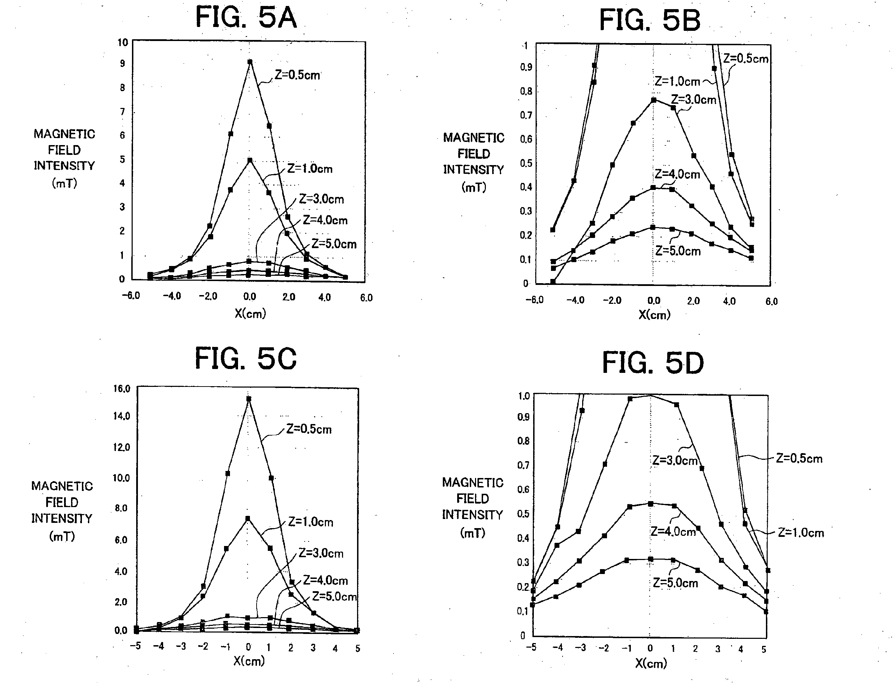

FIG. 5A to FIG. 5D are diagrams showing results of measurement of intensities of magnetic fields at the periphery for a speaker as an example of the speaker 23 of the cradle 3 in the example of the present embodiment. FIG. 5A shows the measurement result on the sound emission surface (front surface) side of the speaker, FIG. 5B is an enlarged diagram of FIG. 5A, FIG. 5C shows the measurement results on an opposite (back surface) side to the sound emission surface of the speaker, and FIG. 5D is an enlarged diagram of FIG. 5C. The abscissas of the diagrams indicate distances in the direction along the sound emission surface of the speaker (see the x-axis direction in FIG. 1A to FIG. 1C and FIG. 3A to FIG. 3B), while the ordinates indicate the distances in the direction perpendicular to the sound emission surface of the speaker (see the z-axis direction in FIG. 1A to FIG. 1C and FIG. 3A to FIG. 3B). x=0 indicates the speaker center, and z=0 indicates the front surface or back surface of the speaker.

The speaker to be measured is the HDR9302-010010 made by HOSIDEN Corporation, that is, a woofer configured by a dynamic speaker. The intensity by which the influence by magnetization appears is 0.3mT for a sensor as an example of the geomagnetic sensor 43. The minimum detection magnetic flux density of a sensor as an example of the opened and closed detecting sensor 42 is 1.2mT.

As shown in FIG. 5A to FIG. 5D, near the front surface or back surface of the speaker, at the position 5 cm apart from the center portion of the speaker, the intensity of the magnetic field becomes less than 0.3 mT, so there is no problem even if the sensor as an example of the geomagnetic sensor 43 or opened and closed detecting sensor 42 is arranged there. Accordingly, if the sensor as an example of the geomagnetic sensor 43 or opened and closed detecting sensor 42 is arranged so as to be spaced apart from the center portion of the speaker by 5 cm or more, the position in the z-direction of the speaker of the cradle can be set at an optional position.

According to the above embodiment, the magnetic sensor such as opened and closed detecting sensor 42 and geomagnetic sensor 43 of the mobile phone 2 and the speaker 23 of the cradle 3 are arranged at positions not superposed on each other when seen in the direction perpendicular to the back surface 6a of the transmitter housing 6 when the transmitter housing 6 of the mobile phone 2 fits in the recess 25 of the cradle 3, therefore the magnetic sensor will be arranged at a position where there is little influence of the magnetic field formed by the speaker 23 and malfunction of the magnetic sensor is prevented. If the magnetic sensor is sufficiently spaced apart from the speaker 23 of the cradle 3 in the direction along the back surface 6a, the influence of the speaker 23 becomes sufficiently small even if the magnetic sensor is at the same surface of the speaker 23. Therefore, as in this embodiment, the device may be designed so that the mobile phone 2 is located in substantially the same plane as that for the speaker 23 of the cradle 3 and reduction of thickness is achieved as a whole. The magnetic sensor and the speaker 23 are prevented from being superposed on each other when seen in the direction perpendicular to the surface having the largest area of the thin type housing (back surface 6a or counter surface). Therefore, even if the housing of the mobile phone 2 is not large in size, by appropriately selecting the position of arrangement of the magnetic sensor inside the mobile phone 2, the magnetic sensor can be arranged at a position apart from the speaker 23. The magnetic sensor is arranged at a position not superposed on the speaker 23 when seen in the direction perpendicular to the back surface 6a while the cradle 3 is supporting the wide surface (back surface 6a) of the mobile phone 2, therefore the influence of the speaker upon the magnetic sensor can be reduced while stably placing the mobile phone 2 on the cradle 3. Note that, in the present embodiment, the speaker 23 is arranged on one end side of the longitudinal direction of the transmitter housing 6, and the magnetic sensor is provided at substantially the center of the longitudinal direction of the transmitter housing 6, therefore the magnetic sensor is provided spaced apart from not only the speaker 23, but also the speech use microphone 35, the speech use speaker 39, and the report use speaker 15, and the influence of the magnetic field is small.

The mobile phone 2 is provided with the receiver housing 5 and transmitter housing 6 connected so that these can be opened and closed, the receiver housing 5 can move in the opening and closing direction with respect to the transmitter housing 6 in the state where the transmitter housing 6 fits in the recess 25 and is arranged at the certain position with respect to the housing 18 of the cradle 3, and the magnetic sensor such as opened and closed detecting sensor 42 and geomagnetic sensor 43 is arranged in the transmitter housing 6. Accordingly, the mobile phone 2 can be brought to the open state or closed state in accordance with the state of use while placing the mobile phone 2 on the cradle 3 as it is, the distance between the magnetic sensor and the speaker 23 of the cradle 3 does not change even if the opened state and the closed state are switched, and the performance of the magnetic sensor becomes stable. Further, as in the embodiment, when the speaker 23 of the cradle 3 is arranged at a position superposed with the receiver housing 5 in the open state and not superposed with the transmitter housing 6 in the closed state and the magnetic sensor is provided in the transmitter housing 6, the magnetic sensor can be prevented from being superposed on the speaker 23 in the opened state, the speaker 23 is made very close to the recess 25 (transmitter housing 6), and a reduction of size is achieved.

The magnetic sensor arranged so as not to be superposed on the speaker 23 of the cradle 3 is the opened and closed detecting sensor 42, therefore the opened and closed detection in the state where the mobile phone 2 is placed on the cradle 3 is correctly carried out. Accordingly, by opening and closing the mobile phone 2 while placing the mobile phone 2 on the cradle 3 as it is, various functions in accordance with the opened state or closed state can be appropriately utilized. Further, when seen from another viewpoint, the magnetic sensor which has been hard to utilize for the opened and closed detection of the mobile phone 2 due to the influence of the magnetic field from the cradle 3 can be utilized for the opened and closed detecting sensor.

The speaker 23 of the cradle 3 and the opened and closed detecting sensor 42 are arranged spaced apart from each other so that the intensity of the magnetic field formed by the speaker 23 at the position of arrangement of the opened and closed detecting sensor 42 becomes smaller than the threshold value of the opened and closed detection, therefore erroneous opened and closed detection is reliably prevented.

The magnetic sensor arranged so as not to be superposed on the speaker 23 of the cradle 3 is the geomagnetic sensor 43, therefore the magnetization of electronic parts at the periphery of the geomagnetic sensor 43 due to the magnet of the speaker 23 is prevented. Accordingly, even after the mobile phone 2 is placed on the cradle 3, the utilization of functions using the geomagnetic sensor 43 becomes possible without calibration. When the mobile phone 2 is detached from the cradle 3, it is not necessary to force the user to perform troublesome work such as rotation of the mobile phone 2 for calibration.

The mobile phone 2 has the receiver housing 5 and transmitter housing 6 connected so that these can be opened and closed. The receiver housing 5 can move in the opening and closing direction with respect to the transmitter housing 6 in the state where the transmitter housing 6 is fit in the recess 25 and arranged at the certain position with respect to the housing 18 of the cradle 3. The display unit 9 displaying the bearing based on the detection result of the geomagnetic sensor 43 is provided in the receiver housing 5, and the geomagnetic sensor 43 is provided in the transmitter housing 6. Therefore, the orientation of the display unit 9 can be appropriately changed by opening and closing the mobile phone 2 while placing the mobile phone 2 on the cradle 3 as it is. In addition, the distance between the geomagnetic sensor 43 and the speaker 23 of the cradle 3 does not change according to the opening and closing operation, therefore there is no apprehension that the geomagnetic sensor 43 will approach the speaker 23 by opening and closing and that the periphery of the geomagnetic sensor 43 will be magnetized. Further, if the geomagnetic sensor 43 is arranged so as to be sufficiently spaced apart from the speaker 23 of the cradle 3, the orientation of the display unit 9 can be appropriately changed while utilizing the function of making the display unit 9 display the bearing based on the detection result of the geomagnetic sensor 43 while placing the mobile phone 2 on the cradle 3 as it is.

The speaker 23 of the cradle 3, the opened and closed detecting sensor 42 and magnet 41, and the geomagnetic sensor 43 are arranged at positions not superposed on each other when seen in the direction perpendicular to the back surface 6a of the transmitter housing 6 when the transmitter housing 6 is fit in the recess 25 of the housing 18 of the cradle 3, therefore not only the influence of the magnetic field of the speaker 23 of the cradle 3 on the opened and closed detecting sensor 42 and the geomagnetic sensor 43, but also the influence of the magnet 41 for the opened and closed detection on the geomagnetic sensor 43 can be reduced. When seen from another viewpoint, by strengthening the intensity of the magnetic field of the opened and closed detection use magnet 41 and increasing the threshold value for detecting the opened and closed state, the influence of the magnetic field of the speaker 23 of the cradle 3 on the opened and closed detecting sensor 42 is made relatively small and erroneous detection of the opened and closed state can be prevented.

The speaker 23 of the cradle 3, the opened and closed detecting sensor 42 and magnet 41, and the geomagnetic sensor 43 are arranged in the order of the speaker 23, the opened and closed detecting sensor 42 and magnet 41, and the geomagnetic sensor 43 when seen in a direction perpendicular to the back surface 6a of the transmitter housing 6 in the closed state when the transmitter housing 6 is fit in the recess 25 of the cradle 3, therefore a reduction of size of the portable electronic unit 1 can be achieved. Namely, when these are arranged in the order of the speaker 23, geomagnetic sensor 43, and opened and closed detecting sensor 42 and magnet 41, the geomagnetic sensor 43 at the center must be at a sufficient distance from the speaker 23 and must be at a sufficient distance from the magnet 41, therefore the distance from the speaker 23 to the magnet 41 becomes long. However, when these are arranged as in the present embodiment, the speaker 23 and the magnet 41 can be made to approach each other, therefore the distance can be shortened as a whole.

The present invention is not limited to the above embodiments and may be executed in various ways.

The portable electronic device need only be a device able to output an audio signal to an external speaker and is not limited to a mobile phone. For example, it may be PDA or notebook personal computer as well. The external speaker device need only be provided with a speaker converting an audio signal from the portable electronic device to sound and outputting the same and is not limited to a charging cradle. For example, it may be a device dedicated to the speaker not provided with a charging function as well.

The predetermined positional relationship of the portable housing of the portable electronic device with respect to the speaker need only be a positional relationship where the audio output unit can output an audio signal to the speaker. Accordingly, the positional relationship is not limited to a positional relationship where the portable side audio terminal provided in the portable housing and the speaker side audio terminal provided in the speaker housing of the external speaker device are connected, but may be a positional relationship where the audio signal of the portable electronic device can be output to the external speaker by infrared ray communication or other communicating means as well. Further, the positional relationship is not limited to a positional relationship where the surface having the largest area in a thin type housing is supported, but may be for example a positional relationship where the portable housing is hung from the speaker housing or the speaker housing is placed on the portable housing.

The speaker of the external speaker device need only be one converting an audio signal from the portable electronic device to sound by utilizing magnetism and is not limited to the dynamic speaker. For example, it may be a ribbon speaker as well.

When the portable housing of the portable electronic device is one which can be opened and closed, the portable housing need only be one in which the relative positions of two or more housings change and is not limited to the flip-open type. For example, it may be a so-called turn type where the transmitter housing and the receiver housing are turned from each other in schematically a parallel state to be opened and closed or a slide type. Even in these types, if the magnetic sensor is provided in one housing, the magnetic field at the periphery of the magnetic sensor changes by the relative movement of the other housing with respect to the magnetic sensor, therefore the opened and closed state can be detected.

The opened and closed detecting sensor need only be one detecting an opened and closed state based on a change of the magnetic field along with opening and closing and is not limited to a sensor provided in one housing and detecting a magnetic field of the magnet provided in the other housing. For example, it may be one detecting a change of the magnetic field generated by the approach and moving apart of the magnetic body of the other housing along with opening and closing. Further, it is not limited to one provided in the housing fixed with respect to the external speaker and may be provided in a housing moveable with respect to the external speaker by the opening and closing operation.

When the geomagnetic sensor is provided in a housing which can be opened and closed, it may be arranged in the housing moveable with respect to the external speaker as well. In this case, the magnetization of parts at the periphery of the geomagnetic sensor can be prevented by connecting the portable electronic device to the external speaker in the state where the geomagnetic sensor is moved away from the external speaker. For example, in the embodiment, when the speaker 23 of the cradle 3 is provided on the end portion 6e side opposite to the connecting portion 7, by arranging the mobile phone 2 in the cradle 3 in the opened state, the geomagnetic sensor 43 can be moved apart from the speaker 23 more than the case where the geomagnetic sensor is provided in the transmitter housing 6, so the magnetization of parts at the periphery of the geomagnetic sensor 43 can be prevented.

The report unit reporting the bearing specified based on the geomagnetism detected by the geomagnetic sensor is not limited to the display unit displaying an image. For example, it may be one reporting the bearing by sound as well.

## Claims

1. An audio device comprising:
an external speaker (23) converting an audio signal and outputting the result;
a portable housing (5, 6) which can be arranged in a predetermined positional relationship with respect to the external speaker (23);
an audio output unit arranged in the portable housing (5, 6) and configured to be outputable the audio signal to the external speaker (23) when the portable housing (5, 6) is arranged in the predetermined positional relationship with respect to the external speaker (23) ; and
a magnetic sensor (43) arranged in the portable housing, wherein
the magnetic sensor (43) and the external speaker (23) are arranged at positions not superposed on each other in a direction perpendicular to a predetermined surface of the portable housing (5, 6) facing the external speaker (23) when the portable housing (5, 6) is arranged in the predetermined positional relationship with respect to the external speaker (23), and wherein further
the magnetic sensor (43) is a geomagnetic sensor detecting geomagnetism, and
the audio device has a report unit (9) configured to report a bearing specified based on the geomagnetism detected by the geomagnetic sensor (43).

2. An audio device as set forth in claim 1, wherein
the portable housing (5, 6) has a first housing (6) and a second housing (5) which are connected to be openable and closable,
the predetermined positional relationship is a positional relationship where the first housing (6) is arranged at a certain position with respect to the external speaker (23), and
the magnetic sensor (43) is arranged in the first housing (6).

3. An audio device as set forth in claim 1, wherein
the portable housing (5, 6) has a first housing (6) and a second housing (5) which are connected to be openable and closable,
the predetermined positional relationship is a positional relationship where the first housing (6) is arranged at a certain position with respect to the external speaker (23),
the second housing (5) can move in an opening and closing direction with respect to the first housing (6) in a state where the first housing (6) is arranged at the certain position,
the report unit (9) is a display unit provided in the second housing (5), and
the magnetic sensor (43) is provided in the first housing (6).

4. A portable terminal comprising the portable housing used for the audio device according to any one of claims 1 to 3.

## Patentansprüche

1. Audiovorrichtung, umfassend:
einen externen Lautsprecher (23), der ein Audiosignal umwandelt und das Ergebnis abgibt,
ein tragbares Gehäuse (5, 6), welches in einer bestimmten Positionsbeziehung bezogen auf den externen Lautsprecher (23) angeordnet werden kann,
eine Audio-Abgabeeinheit, die in dem tragbaren Gehäuse (5, 6) angeordnet ist und die konfiguriert ist, um das Audiosignal an den externen Lautsprecher (23) abgeben zu können, wenn das tragbare Gehäuse (5, 6) in der bestimmten Positionsbeziehung bezogen auf den externen Lautsprecher (23) angeordnet ist,
und einen magnetischen Sensor (43), der in dem tragbaren Gehäuse angeordnet ist,
wobei der magnetische Sensor (43) und der externe Lautsprecher (23) in Positionen angeordnet sind, welche in einer Richtung nicht einander überlagert sind, die rechtwinklig zu einer bestimmten Oberfläche des tragbaren Gehäuses (5, 6) verläuft,
welche dem externen Lautsprecher (23) gegenüberliegt, wenn das tragbare Gehäuse (5, 6) in der bestimmten Positionsbeziehung bezogen auf den externen Lautsprecher (23) angeordnet ist,
wobei ferner der magnetische Sensor (43) ein geomagnetischer Sensor ist, der den Erdmagnetismus detektiert,
und wobei die Audiovorrichtung eine Meldeeinheit (9) aufweist, die konfiguriert ist,
um eine Lage zu melden, die auf der Grundlage des durch den geomagnetischen Sensor (43) detektierten Erdmagnetismus spezifiziert ist.

2. Audiovorrichtung nach Anspruch 1, wobei das tragbare Gehäuse (5, 6) ein erstes Gehäuse (6) und ein zweites Gehäuse (5) aufweist, die miteinander verbunden sind, um geöffnet und geschlossen werden zu können,
wobei die bestimmte Positionsbeziehung eine Positionsbeziehung ist, in der das erste Gehäuse (6) in einer bestimmten Position bezogen auf den externen Lautsprecher (23) angeordnet ist,
und wobei der magnetische Sensor (43) in dem ersten Gehäuse (6) angeordnet ist.

3. Audiovorrichtung nach Anspruch 1, wobei das tragbare Gehäuse (5, 6) ein erstes Gehäuse (6) und ein zweites Gehäuse (5) aufweist, die verbunden sind, um geöffnet und geschlossen werden zu können,
wobei die bestimmte Positionsbeziehung eine Positionsbeziehung ist, in der das erste Gehäuse (6) in einer bestimmten Position bezogen auf den externen Lautsprecher (23) angeordnet ist,
wobei das zweite Gehäuse (5) sich in eine Öffnungs- und Schließrichtung bezogen auf das erste Gehäuse (6) in einem Zustand bewegen kann, in welchem das erste Gehäuse (6) in der bestimmten Position angeordnet ist,
wobei die Meldeeinheit (9) eine Displayeinheit ist, die in dem zweiten Gehäuse (5) vorgesehen ist,
und wobei der magnetische Sensor (43) in dem ersten Gehäuse (6) vorgesehen ist.

4. Tragbares Endgerät, umfassend das tragbare Gehäuse, welches für die Audiovorrichtung nach einem der Ansprüche 1 bis 3 verwendet ist.

## Revendications

1. Dispositif audio comprenant :
un haut-parleur extérieur (23) convertissant un signal audio et délivrant en sortie le résultat ;
un boîtier portatif (5, 6) qui peut être agencé dans une relation de position prédéterminée par rapport à l'haut-parleur extérieur (23) ;
une unité de sortie audio agencée dans le boîtier portatif (5, 6) et configurée de manière à pouvoir délivrer en sortie le signal audio à l'haut-parleur extérieur (23) lorsque le boîtier portatif (5, 6) est agencé dans la relation de position prédéterminée par rapport à l'haut-parleur extérieur (23) ; et
un capteur magnétique (43) agencé dans le boîtier portatif, où
le capteur magnétique (43) et l'haut-parleur extérieur (23) sont agencés à des positions qui ne sont pas superposées l'une sur l'autre dans une direction perpendiculaire à une surface prédéterminée du boîtier portatif (5, 6) faisant face à l'haut-parleur extérieur (23) lorsque le boîtier portatif (5, 6) est agencé dans la relation de position prédéterminée par rapport à l'haut-parleur extérieur (23),
et où en outre,
le capteur magnétique (43) est un capteur géomagnétique détectant le géomagnétisme, et
le dispositif audio a une unité de rapport (9) configurée pour rapporter un relèvement spécifié sur la base du géomagnétisme détecté par le capteur géomagnétique (43).

2. Dispositif audio tel que revendiqué dans la revendication 1, dans lequel
le boîtier portatif (5, 6) a un premier boîtier (6) et un deuxième boîtier (5) qui sont reliés de manière à pouvoir être ouverts et fermés,
la relation de position prédéterminée est une relation de position où le premier boîtier (6) est agencé à une certaine position par rapport à l'haut-parleur extérieur (23), et
le capteur magnétique (43) est agencé dans le premier boîtier (6).

3. Dispositif audio selon la revendication 1, dans lequel
le boîtier portable (5, 6) a un premier boîtier (6) et un deuxième boîtier (5) qui sont reliés de manière à pouvoir être ouverts et fermés,
la relation de position prédéterminée est une relation de position où le premier boîtier (6) est agencé à une certaine position par rapport à l'haut-parleur extérieur (23),
le deuxième boîtier (5) peut se déplacer dans une direction d'ouverture et de fermeture par rapport au premier boîtier (6) dans un état où le premier boîtier (6) est agencé à une certaine position,
l'unité de rapport (9) est une unité d'affichage prévue dans le deuxième boîtier (5), et
le capteur magnétique (43) est prévu dans le premier boîtier (6).

4. Terminal portatif comprenant le boîtier portatif utilisé pour le dispositif audio selon l'une quelconque des revendications 1 à 3.
